# EUROPEAN PATENT SPECIFICATION

(11) **EP 4 517 248 B1**
(45) Date of publication and mention of the grant of the patent: **23.09.2026**
(21) Application number: 23807046.0
(22) Date of filing: 18.05.2023
(51) Int. Cl.: F28F 9/26, F28D 1/053, F28F 9/013, F28F 9/00

(54) **CONNECTING STRUCTURE AND HEAT EXCHANGER HAVING SAME**
VERBINDUNGSSTRUKTUR UND WÄRMETAUSCHER DAMIT
STRUCTURE DE RACCORDEMENT ET ÉCHANGEUR DE CHALEUR LA COMPRENANT

(30) Priority: 20.05.2022 CN 202221217630 U
(43) Date of publication of application: 05.03.2025
(73) Proprietor: Zhejiang Dunan Artificial Environment Co., Ltd., Shaoxing Zhejiang 311835 (CN)
(72) Inventor: YANG, Yuanzhe, Shaoxing, Zhejiang 311835 (CN); DING, Ergang, Shaoxing, Zhejiang 311835 (CN); CAO, Ronghui, Shaoxing, Zhejiang 311835 (CN)
(74) Representative: HGF
(86) International application number: PCT/CN2023/095113
(87) International publication number: WO 2023/222096

(56) References cited:
- EP-A1- 1 571 325
- CN-A- 112 747 502
- CN-U- 213 599 858
- CN-U- 217 403 249
- GB-A- 1 146 012
- JP-A- 2001 317 893
- JP-A- H04 124 501
- JP-A- H10 160 382
- KR-A- 20190 141 429
- US-A- 4 651 816

## Description

### Technical Field

The present disclosure relates to the field of heat exchangers, and in particular, to a heat exchanger.

### Background

At present, an ultra-large microchannel heat exchanger applied to a data center is limited by the width of a hearth of a brazing furnace, and mostly adopts a structure in which a plurality of pieces are spliced in a direction of a header, and the header is in butt joint with a spliced microchannel. Since the shrinkage of each product in a width direction is inconsistent caused by brazing, a gap between side plates of two or more spliced products is relatively large, so that an uneven gap exists between the two spliced products, which easily causes air leakage, thereby seriously affecting the heat exchange efficiency and overall efficiency of the microchannel heat exchanger. CN 112 747 502 A discloses, according to the preamble of claim 1, a heat exchanger comprising a connecting structure with a first heat exchange body and a second heat exchange body connected with each other and defining a connecting region between them. JP H04 124501 A relates to internal flow deflection plates within a heat exchanger.

### Summary

A main objective of the present disclosure is to provide a connecting structure and a heat exchanger having the connecting structure, so as to solve the problem in the related art of low efficiency of splicing operation of the heat exchanger.

In order to achieve the above objective, according to one aspect of the present disclosure, a heat exchanger is provided, wherein the heat exchanger includes a connecting structure, the connecting structure includes: a first heat exchange body and a second heat exchange body which are configured to transfer heat, the first heat exchange body and the second heat exchange body being connected with each other, and a connecting gap being provided between the first heat exchange body and the second heat exchange body; and a first baffle and a second baffle, the first baffle and the second baffle being respectively located on two opposite sides of the first heat exchange body and the second heat exchange body, the first baffle and the second baffle being oppositely disposed, and the connecting gap being located between the first baffle and the second baffle.

The first baffle and the second baffle are arranged extending along a first direction, and a length of the first baffle and a length of the second baffle are respectively greater than a width of the connecting gap along the first direction.

In some embodiment, the heat exchanger further includes: a first connecting plate, the first connecting plate being connected with the first heat exchange body, and the first baffle being connected with the first connecting plate; and, a second connecting plate, the second connecting plate being connected with the second heat exchange body, and the second baffle being connected with the second connecting plate.

In some embodiment, the heat exchanger further includes: the first connecting plate and the second connecting plate which are disposed parallel to each other; and, the first connecting plate and the first baffle which are disposed perpendicular to each other; and, the second connecting plate and the second baffle which are disposed perpendicular to each other.

In some embodiment, the first heat exchange body includes a plurality of connecting fins and a plurality of connecting pipes, the plurality of connecting fins and the plurality of connecting pipes being connected to each other in a staggered manner in a first direction. A length of the first connecting plate is L₁, and an outer diameter of the connecting pipe is W, where L₁≥1.1W.

In some embodiment, a length of the first baffle is L₂, and a thickness of the connecting fin in the first direction is H, where L₂≥0.95(1.5H+T₂).

In some embodiment, a thickness of the connecting pipe in the first direction is T₁, and a thickness of the first baffle and the second baffle are T₂, where T₁≤T₂≤2T₁.

In some embodiment, the heat exchanger includes a third connecting plate, the third connecting plate is connected with the first heat exchange body, and the first baffle and the second baffle are respectively connected with both ends of the third connecting plate.

In some embodiment, the heat exchanger further includes a third baffle and a fourth baffle which are spaced apart from each other, the third baffle and the fourth baffle are both connected with the second heat exchange body, and the third baffle and the fourth baffle are located between the first baffle and the second baffle.

In some embodiment, the heat exchanger further includes: a first header, the first header is connected with the first heat exchange body; a second header, the second header is connected with the second heat exchange body. The first header is provided with a first connecting piece for connected with the second header; and, the second header is provided with a second connecting piece for connected with the first header.

Applying the technical solution of the present disclosure, the heat exchanger includes the first heat exchange body and the second heat exchange body which are configured to transfer heat, the first heat exchange body and the second heat exchange body are connected with each other, and the connecting gap being provided between the first heat exchange body and the second heat exchange body; and the first baffle and the second baffle, the first baffle and the second baffle being respectively located on two opposite sides of the first heat exchange body and the second heat exchange body, the first baffle and the second baffle being oppositely disposed, and the connecting gap being located between the first baffle and the second baffle. By adopting the above arrangement, the first baffle and the second baffle are disposed on both sides of the first heat exchange body and the second heat exchange body, so that the wind blocking effect can be achieved, and the airflow is prevented from flowing through the connecting gap, so that there is no need to use the manual wrapping manner, the heat exchange efficiency of the heat exchanger is improved, and the problem in the related art of low efficiency of the splicing operation of the heat exchanger is solved.

### Brief Description of the Drawings

The drawings of the specification, which constitute a part of the present disclosure, are intended to provide a further understanding of the present disclosure, and the exemplary embodiments of the present disclosure and the description thereof are intended to explain the present disclosure and do not constitute an undue limitation on the present disclosure. In the drawings:
Fig. 1 illustrates a schematic structural diagram of Embodiment 1 of a heat exchanger according to the present disclosure.
Fig. 2 illustrates a schematic structural diagram of a size of Embodiment 1 of a heat exchanger according to the present disclosure.
Fig. 3 illustrates a schematic structural diagram of Embodiment 2 of a heat exchanger according to the present disclosure.
Fig. 4 illustrates a schematic structural diagram of Embodiment 4 of a heat exchanger according to the present disclosure.
Fig. 5 illustrates a schematic structural diagram of Embodiment 3 of a heat exchanger according to the present disclosure.
Fig. 6 illustrates a schematic structural diagram of a first heat exchange body and a second heat exchange body of a heat exchanger according to the present disclosure.
Fig. 7 illustrates a schematic structural diagram of a heat exchanger of a heat exchanger according to the present disclosure.

Herein, the above drawings include the following reference signs.
1. First heat exchange body; 11. Connecting fin; 12. Connecting pipe; 2. Second heat exchange body; 3. Connecting gap; 41. First baffle; 42. Second baffle; 43. Third baffle; 44. Fourth baffle; 51. First connecting plate; 52. Second connecting plate; 53. Third connecting plate; 61. First header; 62. Second header; 71. First connecting piece; 72. Second connecting piece.

### Detailed Description of the Embodiments

It is to be noted that the embodiments in the present disclosure and features in the embodiments may be combined with each other without conflict. The present disclosure is described in detail below with reference to the drawings and in conjunction with the embodiments.

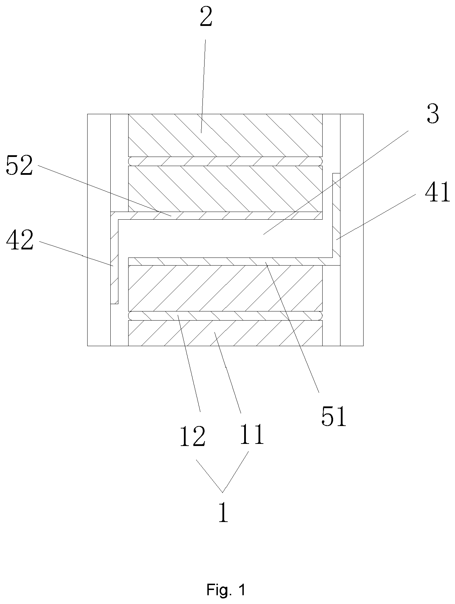

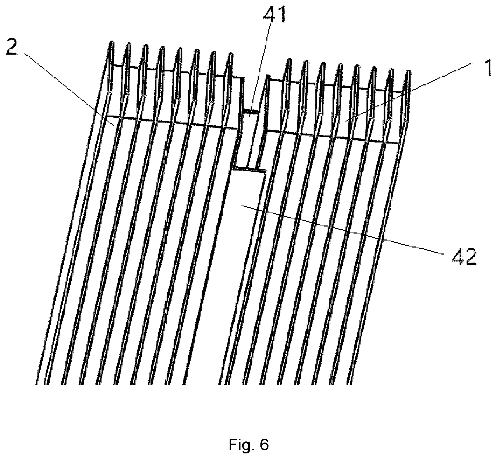

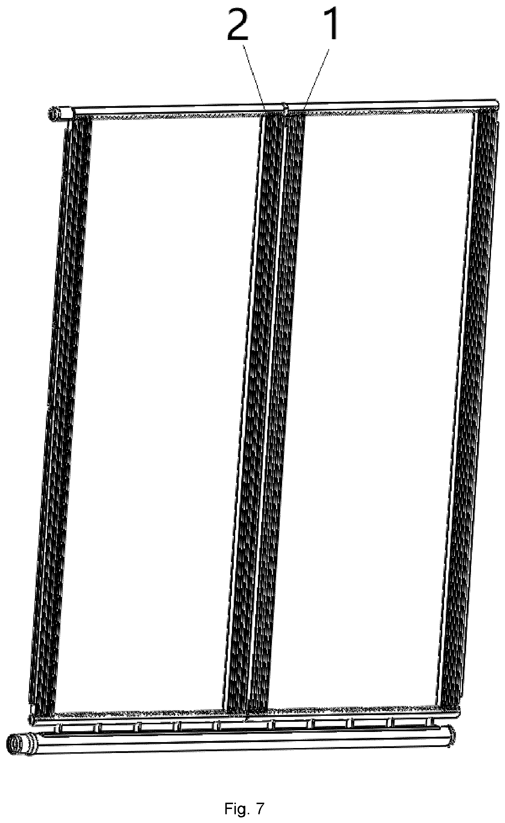

Referring to Fig. 1 to Fig. 7, a heat exchanger of the embodiment includes: a first heat exchange body 1 and a second heat exchange body 2 which are configured to transfer heat, the first heat exchange body 1 and the second heat exchange body 2 being connected with each other, and a connecting gap 3 being provided between the first heat exchange body 1 and the second heat exchange body 2; and a first baffle 41 and a second baffle 42, the first baffle 41 and the second baffle 42 being respectively located on two opposite sides of the first heat exchange body 1 and the second heat exchange body 2, the first baffle 41 and the second baffle 42 being oppositely disposed, and the connecting gap 3 being located between the first baffle 41 and the second baffle 42. By adopting the above arrangement, the first baffle 41 and the second baffle 42 are disposed on both sides of the first heat exchange body 1 and the second heat exchange body 2, so that the wind blocking effect can be achieved, and the airflow is prevented from flowing through the connecting gap 3, so that there is no need to use the manual wrapping manner, the heat exchange efficiency of the heat exchanger is improved, and the problem in the related art of low efficiency of splicing operation of the heat exchanger is solved.

Specifically, since the first heat exchange body 1 and the second heat exchange body 2 are not installed closely on one side, wind flows on both sides, and if a baffle is disposed only on one side, the wind protection effect is not great. Therefore, the baffles are disposed on both sides, that is, the first baffle 41 and the second baffle 42 are disposed, which can effectively reduce the flow of wind.

The first baffle 41 and the second baffle 42 are arranged extending along a first direction, and a length of the first baffle 41 and a length of the second baffle 42 are respectively greater than a width of the connecting gap 3 along the first direction.

In the heat exchanger of the embodiment, referring to Fig. 1 to Fig. 5, the heat exchanger further includes: a first connecting plate 51, the first connecting plate 51 being connected to the first heat exchange body 1, and the first baffle 41 being connected to the first connecting plate 51; and, a second connecting plate 52, the second connecting plate 52 being connected to the second heat exchange body 2, and the second baffle 42 being connected to the second connecting plate 52.

Specifically, a structure of the baffle on one side of a single product that needs to be spliced is changed to an L-shaped side plate, and two products that need to be spliced are assembled in an L-shape for mirror assembly. The spliced L-shaped side plates on both sides can effectively protect the gap and block the wind. This solution is applicable to, but not limited to, double-piece splicing.

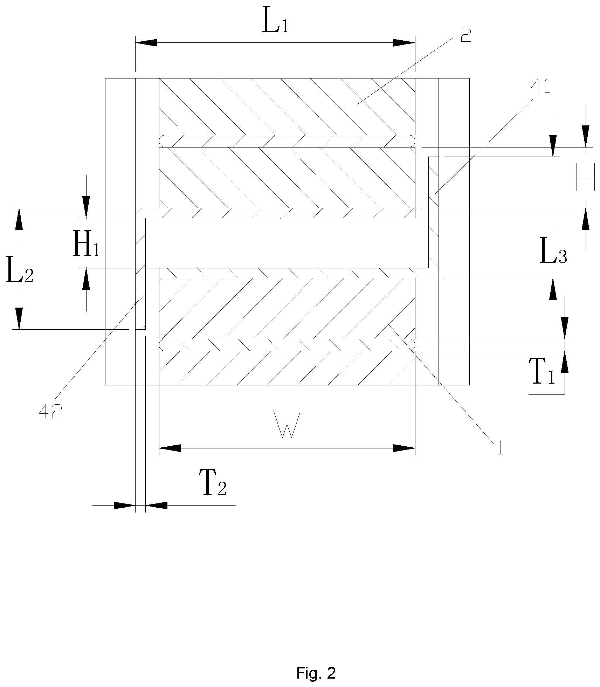

Referring to Fig. 2, in the heat exchanger of the embodiment, the heat exchanger further includes: the first connecting plate 51 and the second connecting plate 52 which are arranged parallel to each other; and, the first connecting plate 51 and the first baffle 41 which are arranged perpendicular to each other; and, the second connecting plate 52 and the second baffle 42 which are arranged perpendicular to each other. Specifically, the first connecting plate 51 and the second connecting plate 52 are disposed at one end of a fin and are fixedly connected with an end of the fin, so as to effectively prevent the fin from being inverted.

It is to be noted that a specific arrangement of the connecting plate and the baffle is not limited. The first connecting plate 51 and the first baffle 41, as well as the second connecting plate 52 and the second baffle 42 are connected through connecting pieces, or the first connecting plate 51 and the first baffle 41, as well as the second connecting plate 52 and the second baffle 42 are disposed integrally.

In the heat exchanger of the embodiment, referring to Fig. 2, the first heat exchange body 1 includes a plurality of connecting fins 11 and a plurality of connecting pipes 12, the plurality of connecting fins 11 and the plurality of connecting pipes 12 are disposed alternately along a first direction in sequence, and each of the plurality of connecting fins is connected with an adjacent connecting pipe. A length of the first connecting plate 51 is L₁, and an outer diameter of the connecting pipe 12 is W, where L₁≥1.1W, thereby ensuring that a vertical side plate has a certain distance from the fin and a flat tube, and effectively preventing the first baffle or the second baffle from colliding with the flat tube and the fin during splicing if they are too close.

Referring to Fig. 2, in the heat exchanger of the embodiment, a length of the first baffle 41 is L₂, and a thickness of the connecting fin 11 in the first direction is H, where L₂≥0.95(1.5H+T₂). Therefore, it is ensured that an end of the baffle is higher than half a height of the fin, so that the baffle has a better wind blocking effect.

In the heat exchanger of the embodiment, referring to Fig. 1 to Fig. 5, a thickness of the connecting pipe 12 in the first direction is T₁, and a thickness of the first baffle 41 and the second baffle 42 are T₂, where T₁≤T₂≤2T₁. The arrangement of the thickness of the baffle effectively ensures the strength of the baffle.

Referring to Fig. 1 to Fig. 7, in the heat exchanger of the embodiment, the heat exchanger includes a third connecting plate 53, the third connecting plate 53 is connected with the first heat exchange body 1, and the first baffle 41 and the second baffle 42 being respectively connected with both ends of the third connecting plate 53.

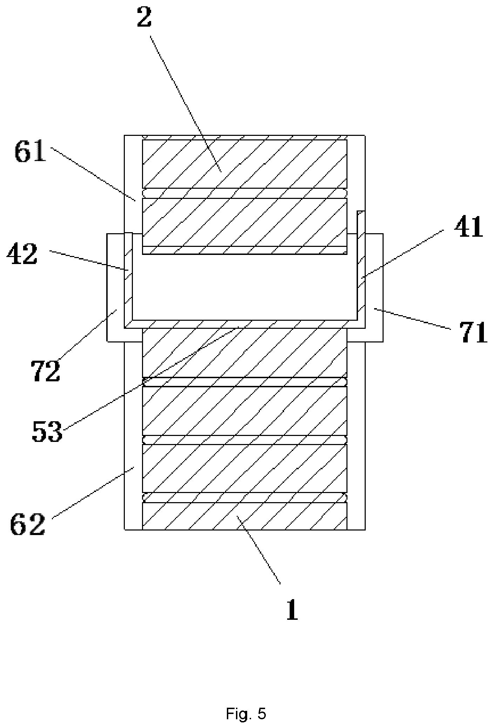

In the heat exchanger of the embodiment, referring to Fig. 5, the heat exchanger further includes a third baffle 43 and a fourth baffle 44 which are spaced apart from each other, the third baffle 43 and the fourth baffle 44 are both connected with the second heat exchange body 2, and the third baffle 43 and the fourth baffle 44 are located between the first baffle 41 and the second baffle 42, so that the double-layer baffles are disposed on two opposite sides of the connecting gap to enhance the wind blocking effect.

Referring to Fig. 1 to Fig. 7, in the heat exchanger of the embodiment, the heat exchanger further includes: a first header 61, the first header 61 being connected with the first heat exchange body 1; a second header 62, the second header 62 being connected with the second heat exchange body 2. The first header 61 is provided with a first connecting piece 71 for connected with the second header 62; and, the second header 62 is provided with a second connecting piece 72 for connected with the first header 61.

In order to evenly distribute a refrigerant inside the header to the connecting pipe, the heat exchange efficiency is improved. Specifically, in some embodiments, the first header 61 is connected with the first heat exchange body 1; the second header 62 is connected with the second heat exchange body 2; the first header 61 is provided with the first connecting piece 71; and the second header 62 is provided with the second connecting piece 72. The first connecting piece 71 is connected with the second connecting piece 72, so that the first header 61 and the second header 62 are connected, thereby completing the connection between the first heat exchange body 1 and the second heat exchange body 2. In this way, the connection between the first heat exchange body 1 and the second heat exchange body 2 is firmer.

In some embodiment, a height of the connecting gap 3 is H₁, a length of the first baffle 41 is L₃, 2H₁>L₃>H₁.

In some embodiment, a height of the connecting gap 3 is H₁, a length of the second baffle 42 is L₂, 2H₁>L₂>H₁.

The length of the first baffle 41 and the length of the second baffle 42 are higher than the height of the connecting gap 3, which enhances the windbreak while avoiding material waste and reducing costs.

The first connecting plate 51 is extended along the length direction of the first heat exchange body 1 and is fixedly connected with the first heat exchange body 1. The first baffle 41 is extended in the direction towards the second heat exchange body 2 to block the connecting gap 3.

The second connecting plate 52 is extended along the length direction of the second heat exchange body 2 and is fixedly connected with the second heat exchange body 2. The second baffle 42 is extended in the direction towards the first heat exchange body 1 to block the connecting gap 3.

In the heat exchanger of the embodiment, referring to Fig. 1 to Fig. 5, a thickness of the connecting pipe 12 in the first direction is T₁, and a thickness of the first baffle 41 or the second baffle 42 is T₂, where T₁≤T₂≤2T₁. The arrangement of the thickness of the baffle effectively ensures the strength of the baffle.

### Embodiment 1:

Referring to Fig. 1, in some embodiments, the first baffle 41 and the second baffle 42 are respectively connected with the first heat exchange body 1 and the second heat exchange body 2, and the first baffle 41 and the second baffle 42 are of L-shaped structures and are symmetrically disposed.

### Embodiment 2:

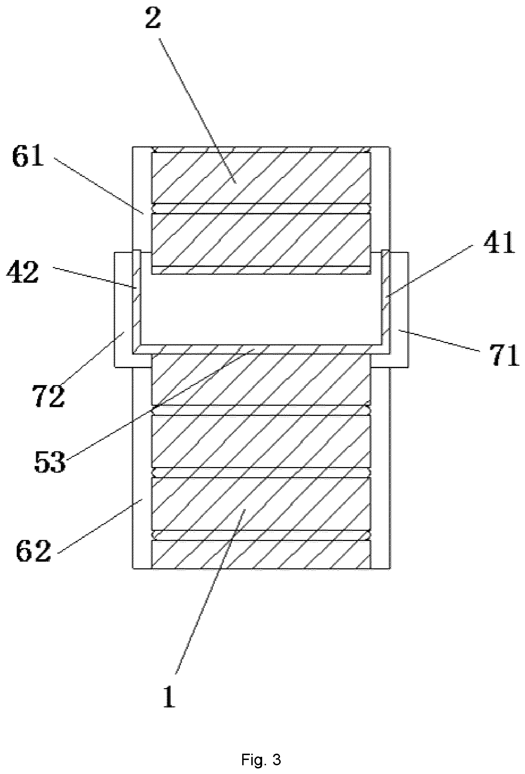

Referring to Fig. 3, in some embodiments, the first baffle 41 and the second baffle 42 are both connected with the first heat exchange body 1, the first baffle 41 and the second baffle 42 are of an integrated structure and are U-shaped, and the first baffle 41 and the second baffle 42 are symmetrically disposed.

### Embodiment 3:

Referring to Fig. 5, in some embodiments, the first baffle 41 and the second baffle 42 are both connected with the first heat exchange body 1, the first baffle 41 and the second baffle 42 are of an integrated structure and are U-shaped, and the first baffle 41 and the second baffle 42 are asymmetrically disposed, that is, the first baffle 41 and the second baffle 42 have different lengths.

### Embodiment 4:

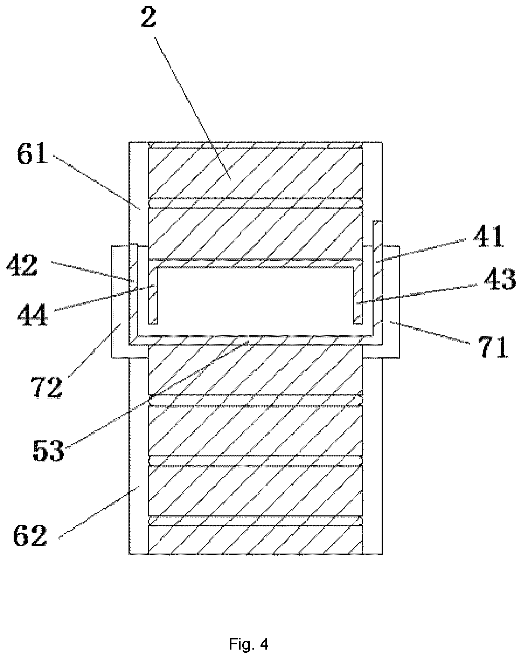

Referring to Fig. 4, in some embodiments, the heat exchanger further includes a third baffle 43 and a fourth baffle 44 which are spaced apart from each other, the third baffle 43 and the fourth baffle 44 are both connected with the second heat exchange body 2, and the third baffle 43 and the fourth baffle 44 are located between the first baffle 41 and the second baffle 42.

A heat exchanger of the embodiment includes a connecting structure, the connecting structure being the above connecting structure.

From the above description, it is seen that the above embodiments of the present disclosure achieve the following technical effects.

The heat exchanger of the embodiment includes: the first heat exchange body 1 and the second heat exchange body 2 which are configured to transfer heat, the first heat exchange body 1 and the second heat exchange body 2 being connected with each other, and the connecting gap 3 being provided between the first heat exchange body 1 and the second heat exchange body 2; and the first baffle 41 and the second baffle 42, the first baffle 41 and the second baffle 42 being respectively located on two opposite sides of the first heat exchange body 1 and the second heat exchange body 2, the first baffle 41 and the second baffle 42 being oppositely disposed, and the connecting gap 3 being located between the first baffle 41 and the second baffle 42. By adopting the above arrangement, the first baffle 41 and the second baffle 42 are disposed on both sides of the first heat exchange body 1 and the second heat exchange body 2, so that the wind blocking effect can be achieved, and the airflow is prevented from flowing through the connecting gap 3, so that there is no need to use the manual wrapping manner, the heat exchange efficiency of the heat exchanger is improved, and the problem in the related art of low efficiency of the splicing operation of the heat exchanger is solved.

It is to be noted that terms used herein are only for the purpose of describing the specific implementations and not intended to limit exemplary implementations of the present disclosure. For example, singular forms, used herein, are also intended to include plural forms, unless otherwise clearly pointed out. In addition, it is also to be understood that terms "contain" and/or "include" used in the specification refer/refers to existence of features, steps, operations, apparatuses, components and/or combinations thereof.

Unless otherwise specified, relative arrangements of components and steps elaborated in these embodiments, numeric expressions and numeric values do not limit the scope of the present disclosure. Furthermore, it is to be understood that for ease of descriptions, the size of each part shown in the drawings is not drawn in accordance with an actual proportional relation. Technologies, methods and devices known by those of ordinary skill in the art may not be discussed in detail. However, where appropriate, the technologies, the methods and the devices shall be regarded as split of the authorized description. In all examples shown and discussed herein, any specific value should be interpreted as only exemplar values instead of limited values. As a result, other examples of the exemplary embodiments may have different values. It is to be noted that similar marks and letters represent similar items in the following drawings. As a result, once a certain item is defined in one drawing, it is unnecessary to further discus the certain item in the subsequent drawings.

In the description of the present disclosure, it is to be understood that the orientations or positional relationships indicated by the orientation words "front, rear, upper, down, left and right", "transverse, longitudinal, vertical and horizontal", "top and bottom", etc. are based on the orientations or positional relationships shown in the drawings, and are only for the convenience of describing the present disclosure and simplifying the description. Unless stated to the contrary, these orientation words do not indicate or imply that the apparatus or element referred to must have a specific orientation, be constructed and operated in a specific orientation, and therefore cannot be construed as limiting the scope of protection of the present disclosure. The orientation words "inside and outside" refer to inside and outside relative to the outline of each part itself.

For ease of description, spatially relative terms such as "over", "above", "on an upper surface" and "upper" may be used herein for describing a spatial position relation between a device or feature and other devices or features shown in the drawings. It should be understood that the spatially relative terms are intended to contain different orientations of the device in usage or operation besides the orientations of the devices described in the drawings. For example, if the devices in the drawings are inverted, those described as "above other devices or structures" or "over other devices or structures" will then be positioned as "below other devices or structures" or "under other devices or structures". Thus, the exemplary term "above" may include both "above" and "below" orientations. The device may also be positioned in various other ways (rotated 90 degrees or at other orientations) and the spatially relative descriptions used herein are interpreted accordingly.

Furthermore, it is to be noted that the use of the words "first", "second" and the like to define parts is only for the convenience of distinguishing the corresponding parts, unless otherwise stated, the words have no special meaning, and therefore cannot be construed as limiting the scope of protection of the present disclosure.

**The** above is only the preferred embodiments of the present disclosure, and is not intended to limit the present disclosure, and for those of ordinary skill in the art, various modifications and changes may be made to the present disclosure. Any modifications, equivalent substitutions, improvements, etc. within the scope of the claims shall be included in the scope of protection of the present disclosure.

## Claims

1. A heat exchanger, comprising a connecting structure, wherein the connecting structure comprises:
a first heat exchange body (1) and a second heat exchange body (2) which are configured to transfer heat, the first heat exchange body (1) and the second heat exchange body (2) are connected with each other, and a connecting gap (3) being provided between the first heat exchange body (1) and the second heat exchange body (2);
**characterized in that** the connecting structure further comprises:
a first baffle (41) and a second baffle (42), the first baffle (41) and the second baffle (42) being respectively located on two opposite sides of the first heat exchange body (1) and the second heat exchange body (2), the first baffle (41) and the second baffle (42) being oppositely disposed, and the connecting gap (3) being located between the first baffle (41) and the second baffle (42); the first baffle (41) and the second baffle (42) are arranged extending along a first direction, and a length of the first baffle (41) and a length of the second baffle (42) are respectively greater than a width of the connecting gap (3) along the first direction;
a first connecting plate (51), the first connecting plate (51) being connected with the first heat exchange body (1), and the first baffle (41) being connected with the first connecting plate (51); and/or,
a second connecting plate (52), the second connecting plate (52) being connected with the second heat exchange body (2), and the second baffle (42) being connected with the second connecting plate (52).

2. **The** heat exchanger as claimed in claim 1, wherein the connecting structure further comprises:
the first connecting plate (51) and the second connecting plate (52) which are disposed parallel to each other; and/or,
the first connecting plate (51) and the first baffle (41) which are disposed perpendicular to each other; and/or,
the second connecting plate (52) and the second baffle (42) which are disposed perpendicular to each other.

3. **The** heat exchanger as claimed in claim 1, wherein the first heat exchange body (1) comprises a plurality of connecting fins (11) and a plurality of connecting pipes (12), the plurality of connecting fins (11) and the plurality of connecting pipes (12) being connected to each other in a staggered manner in a first direction, wherein a length of the first connecting plate (51) is L₁, and an outer diameter of the connecting pipe (12) is W, where L₁≥1.1 W.

4. The heat exchanger as claimed in claim 3, wherein a length of the first baffle (41) is L₂, and a thickness of the connecting fin (11) in the first direction is H, where L₂≥0.95(1.5H+T₂).

5. The heat exchanger as claimed in claim 3, wherein a thickness of the connecting pipe (12) in the first direction is T₁, and a thickness of the first baffle (41) and the second baffle (42) are T₂, where T₁≤T₂≤2T₁.

6. The heat exchanger according to as claimed in claims 1 to 5, wherein the connecting structure further comprises:
a first header (61), the first header (61) is connected with the first heat exchange body (1);
a second first header (62), the second header (62) is connected with the second heat exchange body (2);
wherein the first header (61) is provided with a first connecting piece (71) for connected with the second header (62); and/or, the second header (62) is provided with a second connecting piece (72) for connected with the first header (61).

## Patentansprüche

1. Wärmetauscher, umfassend eine Verbindungsstruktur, wobei die Verbindungsstruktur Folgendes umfasst:
einen ersten Wärmetauschkörper (1) und einen zweiten Wärmetauschkörper (2), die dazu konfiguriert sind, Wärme zu übertragen, wobei der erste Wärmetauschkörper (1) und der zweite Wärmetauschkörper (2) miteinander verbunden sind und ein Verbindungsspalt (3) zwischen dem ersten Wärmetauschkörper (1) und dem zweiten Wärmetauschkörper (2) bereitgestellt ist;
**dadurch gekennzeichnet, dass** die Verbindungsstruktur ferner Folgendes umfasst:
ein erstes Ablenkblech (41) und ein zweites Ablenkblech (42), wobei sich das erste Ablenkblech (41) und das zweite Ablenkblech (42) jeweils an zwei gegenüberliegenden Seiten des ersten Wärmetauschkörpers (1) und des zweiten Wärmetauschkörpers (2) befinden, wobei das erste Ablenkblech (41) und das zweite Ablenkblech (42) gegenüberliegend vorgesehen sind und sich der Verbindungsspalt (3) zwischen dem ersten Ablenkblech (41) und dem zweiten Ablenkblech (42) befindet; das erste Ablenkblech (41) und das zweite Ablenkblech (42) sich entlang einer ersten Richtung erstreckend angeordnet sind und eine Länge des ersten Ablenkblechs (41) und eine Länge des zweiten Ablenkblechs (42) jeweils größer als eine Breite des Verbindungsspalts (3) entlang der ersten Richtung sind;
eine erste Verbindungsplatte (51), wobei die erste Verbindungsplatte (51) mit dem ersten Wärmetauschkörper (1) verbunden ist und das erste Ablenkblech (41) mit der ersten Verbindungsplatte (51) verbunden ist; und/oder
eine zweite Verbindungsplatte (52), wobei die zweite Verbindungsplatte (52) mit dem zweiten Wärmetauschkörper (2) verbunden ist und das zweite Ablenkblech (42) mit der zweiten Verbindungsplatte (52) verbunden ist.

2. Wärmetauscher nach Anspruch 1, wobei die Verbindungsstruktur ferner Folgendes umfasst:
die erste Verbindungsplatte (51) und die zweite Verbindungsplatte (52), die parallel zueinander vorgesehen sind; und/oder
die erste Verbindungsplatte (51) und das erste Ablenkblech (41), die senkrecht zueinander vorgesehen sind; und/oder
die zweite Verbindungsplatte (52) und das zweite Ablenkblech (42), die senkrecht zueinander vorgesehen sind.

3. Wärmetauscher nach Anspruch 1, wobei der erste Wärmetauschkörper (1) eine Vielzahl von Verbindungsrippen (11) und eine Vielzahl von Verbindungsrohren (12) umfasst, wobei die Vielzahl von Verbindungsrippen (11) und die Vielzahl von Verbindungsrohren (12) auf eine versetzte Weise in einer ersten Richtung miteinander verbunden sind, wobei eine Länge der ersten Verbindungsplatte (51) L₁ ist und ein Außendurchmesser des Verbindungsrohres (12) W ist, wobei L₁≥1,1 W.

4. Wärmetauscher nach Anspruch 3, wobei eine Länge des ersten Ablenkblechs (41) L₂ ist und eine Dicke der Verbindungsrippe (11) in der ersten Richtung H ist, wobei L₂≥0,95(1,5H+T₂).

5. Wärmetauscher nach Anspruch 3, wobei eine Dicke des Verbindungsrohres (12) in der ersten Richtung T₁ ist und eine Dicke des ersten Ablenkblechs (41) und des zweiten Ablenkblechs (42) T₂ sind, wobei T₁≤T₂≤2T₁.

6. Wärmetauscher nach Anspruch 1 bis 5, wobei die Verbindungsstruktur ferner Folgendes umfasst:
einen ersten Header (61), wobei der erste Header (61) mit dem ersten Wärmetauschkörper (1) verbunden ist;
einen zweiten ersten Header (62), wobei der zweite Header (62) mit dem zweiten Wärmetauschkörper (2) verbunden ist;
wobei der erste Header (61) mit einem ersten Verbindungsstück (71) zum Verbunden mit dem zweiten Header (62) bereitgestellt ist; und/oder der zweite Header (62) mit einem zweiten Verbindungsstück (72) zum Verbunden mit dem ersten Header (61) bereitgestellt ist.

## Revendications

1. Echangeur de chaleur, comprenant une structure de raccordement, dans lequel la structure de raccordement comprend :
un premier corps d'échange de chaleur (1) et un second corps d'échange de chaleur (2) qui sont configurés pour transférer de la chaleur, le premier corps d'échange de chaleur (1) et le second corps d'échange de chaleur (2) sont raccordés l'un à l'autre, et un espace de raccordement (3) étant prévu entre le premier corps d'échange de chaleur (1) et le second corps d'échange de chaleur (2) ;
**caractérisé en ce que** la structure de raccordement comprend en outre :
un premier déflecteur (41) et un second déflecteur (42), le premier déflecteur (41) et le second déflecteur (42) étant respectivement situés sur deux côtés opposés du premier corps d'échange de chaleur (1) et du second corps d'échange de chaleur (2), le premier déflecteur (41) et le second déflecteur (42) étant disposés de manière opposée, et l'espace de raccordement (3) étant situé entre le premier déflecteur (41) et le second déflecteur (42) ; le premier déflecteur (41) et le second déflecteur (42) sont disposés en extension selon une première direction, et une longueur du premier déflecteur (41) et une longueur du second déflecteur (42) sont respectivement supérieures à une largeur de l'espace de raccordement (3) selon la première direction ;
une première plaque de raccordement (51), la première plaque de raccordement (51) étant raccordée au premier corps d'échange de chaleur (1), et le premier déflecteur (41) étant raccordé à la première plaque de raccordement (51) ; et/ou,
une seconde plaque de raccordement (52), la seconde plaque de raccordement (52) étant raccordée au second corps d'échange de chaleur (2), et le second déflecteur (42) étant raccordé à la seconde plaque de raccordement (52).

2. Echangeur de chaleur selon la revendication 1, dans lequel la structure de raccordement comprend en outre :
la première plaque de raccordement (51) et la seconde plaque de raccordement (52) qui sont disposées parallèlement l'une à l'autre ; et/ou,
la première plaque de raccordement (51) et le premier déflecteur (41) qui sont disposés perpendiculairement l'un à l'autre ; et/ou,
la seconde plaque de raccordement (52) et le second déflecteur (42) qui sont disposés perpendiculairement l'un à l'autre.

3. Echangeur de chaleur selon la revendication 1, dans lequel le premier corps d'échange de chaleur (1) comprend une pluralité d'ailettes de raccordement (11) et une pluralité de tuyaux de raccordement (12), la pluralité d'ailettes de raccordement (11) et la pluralité de tuyaux de raccordement (12) étant raccordées les uns aux autres en quinconce dans une première direction, dans lequel une longueur de la première plaque de raccordement (51) est L₁, et un diamètre extérieur du tuyau de raccordement (12) est W, où L₁≥1,1 W.

4. Echangeur de chaleur selon la revendication 3,
dans lequel une longueur du premier déflecteur (41) est L₂, et une épaisseur de l'ailette de raccordement (11) dans la première direction est H, où L₂≥0,95(1,5H + T₂).

5. Echangeur de chaleur selon la revendication 3, dans lequel une épaisseur du tuyau de raccordement (12) dans la première direction est T₁, et une épaisseur du premier déflecteur (41) et du second déflecteur (42) sont T₂, où T₁≤T₂≤2T₁.

6. Echangeur de chaleur selon les revendications 1 à 5, dans lequel la structure de raccordement comprend en outre :
un premier collecteur (61), le premier collecteur (61) étant raccordé au premier corps d'échange de chaleur (1) ;
un second premier collecteur (62), le second collecteur (62) étant raccordé au second corps d'échange de chaleur (2) ;
dans lequel le premier collecteur (61) est doté d'un premier élément de raccordement (71) destiné à être raccordé au second collecteur (62) ; et/ou, le second collecteur (62) est doté d'un second élément de raccordement (72) destiné à être raccordée au premier collecteur (61).
